# EUROPÄISCHE PATENTANMELDUNG

(11) **EP 2 851 263 A2**
(43) Veröffentlichungstag der Anmeldung: **25.03.2015**
(21) Anmeldenummer: 14003173.3
(22) Anmeldetag: 13.09.2014
(51) Int. Cl.: B62B 3/02, A47B 3/10, A47B 37/04

(54) **Transportwagen**

(30) Priorität: 19.09.2013 DE 102013015627
(71) Anmelder: Hubert, Gail, 86453 Dasing (DE)
(72) Erfinder: Hubert, Gail, 86453 Dasing (DE)

(57) **Zusammenfassung**

Die Erfindung ermöglicht zum einen den Transport von Gegenständen, zusätzlich kann die Erfindung am Zielort in eine Tisch/-Sitzkombination umgebaut werden.
Nach dem Wenden des Transportwagens um seine Längsachse befindet sich in den beiden stirnseitigen Grundrahmen (4 ) jeweils ein Gestänge (5), das in der Höhe verstellt und festgeklemmt werden kann. Nachdem die Räder (8) und die Zugdeichsel (9) abgenommen wurden, können die kippbaren Seiten- (2) bzw. Stirnwände (3) heruntergeklappt und als Sitzbänke genutzt werden. Die Grundplatte (1) dient als Tischplatte. Mit den schwenkbaren Stützen (7) auf der Außenseite der Seiten- und Stirnwände können diese am Untergrund abgestützt werden, um einen sicheren Stand der Tisch/Sitzkombination zu gewährleisten. Die Stützen können zusätzlich mit den beiden auf dem Untergrund abgelegten Längsträgem (6) verbunden werden, um die Standsicherheit zu erhöhen. Über eine Halterung kann an der Tisch/Sitzkombination ein Sonnenschirm (10) angebracht werden.

## Beschreibung

Nach dem Stand der Technik sind nur Transportwagen bekannt, die sich dazu eignen, Gegenstände zu befördern.

Bei vielen Unternehmungen oder Tätigkeiten im Freien, wie z.B. im Freizeitbereich beim Baden oder Grillen an einem Badestrand, ist es zum Speisen oder für diverse Tätigkeiten häufig erforderlich, dass Stühle und Tische zu Fuß vom Kfz zum Zielort transportiert werden, da diese vor Ort oft nicht vorhanden sind. Dieselbe Problematik stellt sich auch beim Angeln an einem Gewässer, bei der die Gerätschaften und Tätigkeiten mangels Tisch und Sitzgelegenheit, meist am Boden abgestellt bzw. verrichtet werden.

Im gewerblichen Bereich liegt diese Problematik z. B. beim Aufbau von Messe- oder Marktständen ebenfalls vor, da zu diesem Zweck oft umfangreiches Zubehör von Hand transportiert werden muss und am Messe- bzw. Marktstand meist ein Tisch mit Sitzgelegenheit nötig ist.

Wird für derartige Unternehmungen ein Handtransportwagen nach dem Stand der Technik benutzt, müssen aufgrund der begrenzten Ladekapazität Tische und Stühle häufig von Hand transportiert werden.

Ein weiteres Problem stellt der fehlende Sonnen- bzw. Regenschutz bei Unternehmungen im Freien dar. Häufig ist es notwendig, dass Schutzschirme zusätzlich von Hand zum Zielort befördert werden. Das Aufstellen des Schirms erfordert je nach Untergrund zudem meist einen Erdspieß oder Schirmständer, der ebenfalls transportiert werden muss.

Der im Patentanspruch 1 angegebenen Erfindung liegt das Problem zugrunde, dass bei Unternehmungen die zu Fuß mit Handtransportwagen nach dem Stand der Technik getätigt werden, zusätzlich Tische und Stühle transportiert werden müssen, da diese am Zielort häufig nicht vorhanden sind.

Dieses Problem wird durch die im Patentanspruch 1 aufgeführten Merkmale gelöst.

Die Erfindung ermöglicht es zum einen, Zubehör und Gerätschaften nach dem Stand der Technik zu transportieren. Die mit der Erfindung erzielten Vorteile bestehen insbesondere darin, dass die Erfindung am Zielort in eine Tisch/-Sitzkombination umgebaut werden kann, sodass der Transport von Tischen und Stühlen entfällt. Weiter bietet die Erfindung den Vorteil, dass an derselben ein Schirm zum Schutz vor den Elementen angebracht werden kann, sodass sich der Transport eines Schirmständers oder Erdspießes ebenfalls erübrigt.

Die Erfindung wird anhand eines schematisch dargestellten Ausführungsbeispiels näher erläutert.

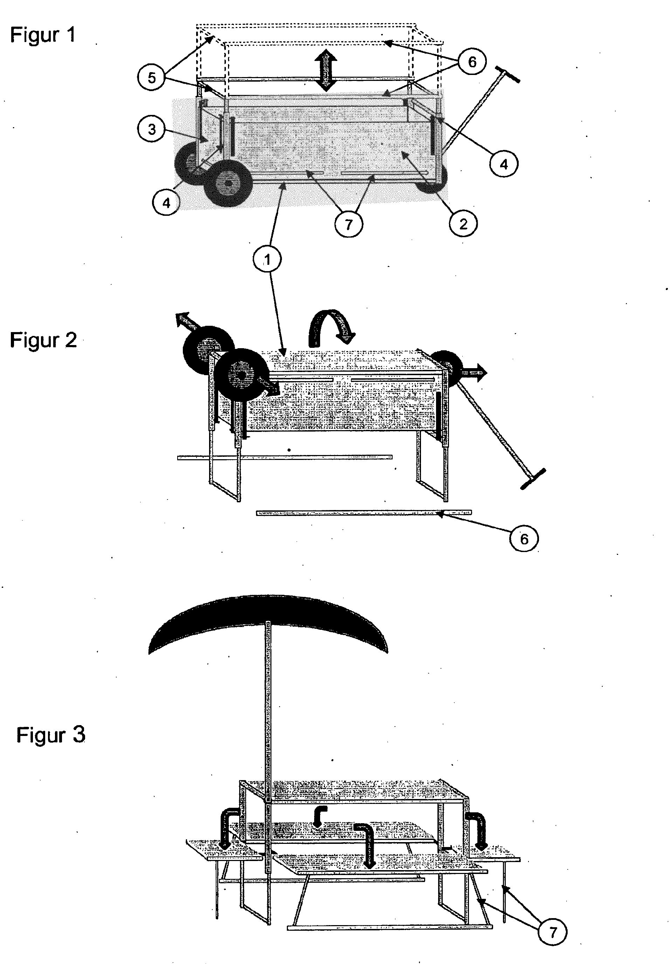

Es zeigt Fig. 1 den Transportwagen mit eingeklappten Seiten- und Stirnwänden (2) und (3), wie er zum Befördern von Gegenständen und Utensilien verwendet wird. In den beiden stirnseitigen Grundrahmen (4) ist jeweils ein Gestänge (5) gelagert, wel-ches in der Höhe verstellbar ist und nach dem Herausziehen am Grundrahmen arretiert bzw. festgeklemmt werden kann.

Fig. 2 zeigt den Transportwagen nach dem Wenden um seine Längsachse. Die beiden herausgezogenen und festgeklemmten Gestänge dienen zum Stand des Transportwagens. Die Grundplatte (1) ist nach oben gerichtet. Die Räder sowie die Zugdeichsel können von dem Transportwagen abgenommen werden.

Fig. 3 zeigt den Transportwagen in derselben Position wie in Fig. 2. Die kippbaren Seiten- und Stirnwände können von der horizontalen Stellung in eine waagrechte Position heruntergeklappt werden. In dieser Position können die Seiten- und Stirnwände am Grundrahmen arretiert bzw. festgeklemmt werden, sodass sie als Sitzgelegenheit dienen. Die Grundplatte stellt die Tischplatte dar. Um einen sicheren Stand der Tisch/Sitzkombination zu gewährleisten, können die Stützen (7) welche sich auf den Außenseiten der Seiten- und Stirnwände befinden, aufgeklappt werden um die zu Sitzbänken umfunktionierten Seiten- und Stirnwände am Untergrund abzustützen. Zusätzlich können die vom Gestänge abnehmbaren Längsträger (6) mit den Stützen der Seitenwände verbunden werden, um einen sicheren Stand der Tisch/Sitzkombination zu gewährleisten.

Mittels einer Halterung bzw. Aufnahme kann an der Tisch/Sitzkombination ein Schirm zum Schutz vor den Elementen angebracht werden.

### Bezugszeichenliste:

- 1: Grundplatte
- 2: Seitenwand
- 3: Stirnwand
- 4: Grundrahmen
- 5: Gestänge
- 6: Längsträger
- 7: Stützen

## Patentansprüche

1. Transportwagen, **dadurch gekennzeichnet, dass** nach dem Wenden des Wagens um seine Längsachse und dem Abmontieren der Räder sowie der Zugdeichsel, der Transportwagen durch das Herunterklappen der kippbaren Seiten- und Stirnwände (2) und (3) in eine Tisch/Sitzkombination umgebaut werden kann

2. Transportwagen nach Patentanspruch 1, **dadurch gekennzeichnet, dass** sich an der Vorder-und Rückseite jeweils ein Grundrahmen (4) befindet, in dem jeweils ein Gestänge (5) gelagert ist, welches sich in der Höhe verstellen lässt.

3. Transportwagen nach Patentanspruch 2, **dadurch gekennzeichnet, dass** die beiden in der Höhe verstellbaren Gestänge (5), an den Grundrahmen (4) arretiert oder festgeklemmt werden können.

4. Transportwagen nach Patentanspruch 3, **dadurch gekennzeichnet, dass** auf die beiden Gestänge (5) zwei Längsträger (6) angebracht und wieder abgenommen werden können

5. Transportwagen nach Patentanspruch 1, **dadurch gekennzeichnet, dass** die Räder sowie die Zugdeichsel von den Grundrahmen (4) abgenommen bzw. wieder aufmontiert werden können.

6. Transportwagen nach Patentanspruch 1, **dadurch gekennzeichnet, dass** die kippbaren Seiten- und Stirnwände nach dem Herunterklappen in der waagrechten Position arretiert oder festgeklemmt werden können.

7. Transportwagen nach Patentanspruch 1, **dadurch gekennzeichnet, dass** auf Außenseiten der Seiten- und Stirnwände schwenkbare Stützen (7) montiert sind.

8. Transportwagen nach Patentanspruch 7, **dadurch gekennzeichnet, dass** die heruntergeklappten Seiten- und Stirnwände durch die schwenkbaren Stützen (7) auf dem Untergrund abgestützt werden können.

9. Transportwagen nach Patentanspruch 8, **dadurch gekennzeichnet, dass** die schwenkbaren Stützen (7) mit den Längsträgern (6) am Boden verbunden werden können.

10. Transportwagen nach Patentanspruch 1, bei dem ein Schutzschirm gegen die Elemente angebracht werden kann.
